# EUROPEAN PATENT APPLICATION

(11) **EP 4 647 813 A1**
(43) Date of publication of application: **12.11.2025**
(21) Application number: 24726526.7
(22) Date of filing: 04.01.2024
(51) Int. Cl.: G01V 5/00, G01N 23/046, G05B 19/042

(54) **SECURITY INSPECTION SYSTEM FOR AVIATION CARGO BOX AND CONTROL METHOD THEREFOR**

(30) Priority: 06.01.2023 CN 202310018928
(71) Applicant: Nuctech Jiangsu Company Limited, Changzhou, Jiangsu 213200 (CN); Nuctech Company Limited, TongFang Building Shuangqinglu Haidian District Beijing 100084 (CN)
(72) Inventor: ZHANG, Li, Beijing 100084 (CN); LI, Yuanjing, Beijing 100084 (CN); HUANG, Qingping, Beijing 100084 (CN); XU, Jianping, Beijing 100084 (CN); REN, Qianlu, Beijing 100084 (CN); WANG, Qianli, Beijing 100084 (CN); CHEN, Yu, Beijing 100084 (CN); GAO, Yang, Beijing 100084 (CN); ZHAN, Qingjie, Beijing 100084 (CN)
(74) Representative: Cabinet Beau de Loménie
(86) International application number: PCT/CN2024/070648
(87) International publication number: WO 2024/146609

(57) **Abstract**

The present application discloses a security screening system for a unit load device (ULD), and a control method thereof. The security screening system includes: a computerized tomography (CT) machine configured to perform whole box scan of the ULD to generate scanning data; an analysis working station configured to identify and mark security screening information of a suspicious item based on the scanning data; a recheck working station provided with a mobile device and capable of submitting recheck item information, wherein the mobile device is synchronized with the security screening information of the suspicious item, performs recheck process on the suspicious item inside of the ULD, and is able to input the recheck item information formed by the recheck process; and a review working station configured to confirm the security screening information of the suspicious item and the recheck item information.

## Description

### CROSS REFERENCE TO RELATED APPLICATION

The present application claims priority to Chinese Patent Application No. 202310018928.1 filed on January 6, 2023, and titled "SECURITY SCREENING SYSTEM FOR UNIT LOAD DEVICE AND CONTROL METHOD THEREOF", which is incorporated herein by reference in its entirety.

### TECHNICAL FIELD

The present application relates to the field of security screening, and more particularly, to a security screening system for a unit load device (ULD) and a control method thereof.

### BACKGROUND

Air transport is an important means of international circulation of goods, the particularity of the air transport makes flammable and explosive materials to lead to greater disaster losses. Use of the air transport with smuggling and illegally transport of prohibited goods (such as drugs, weapons, guns and radioactive spread devices) has become an international public hazard that troubles governments and interferes with the normal order of international cargo transport. The security screening of the air transport is a subject of common concern around the world.

At present, the security screening methods of a unit load device (ULD) are divided into two kinds: (1) using the way of bulk inspection, dispersing the goods in the ULD, and adopting the same method as the security screening of civil aviation passenger transport; and (2) performing an overall CT scan check of the packed ULD. Method (1) is similar to the traditional passenger security screening method, it is not suitable for the large-throughput ULD scenario, and it has the disadvantages of high labor cost, high time cost, and low security screening efficiency. Method (2) adopts the method of overall scanning of the ULD, but when a wide variety and a heavy stacking of mass goods are checked, the image is seriously blocked and the detail resolution is insufficient.

Based on this, the existing security screening scheme mostly adopts the method of performing image recognition and judgment (hereinafter, sometimes referred to as "image judgment") based on the overall CT scan data, and then performing recheck (hereinafter, sometimes referred to as "recheck process") to solve the problem. The two-step scheme can reduce the false alarm rate, but there is still the possibility of omission and misjudgment, and often subtle omissions can lead to serious consequences.

### SUMMARY

The purpose of the present application is to provide a security screening system for a unit load device (ULD) and a control method thereof, which can reduce the false alarm rate.

A first aspect of the present application provides a security screening system for an ULD, comprising: a computerized tomography (CT) machine configured to perform whole box scan of the ULD to generate scanning data; an analysis working station configured to identify and mark security screening information of a suspicious item based on the scanning data; a recheck working station provided with a mobile device and capable of submitting recheck item information, wherein the mobile device is synchronized with the security screening information of the suspicious item, performs recheck process on the suspicious item inside of the ULD, and is able to input the recheck item information formed by the recheck process; and a review working station configured to confirm the security screening information of the suspicious item and the recheck item information.

In the above security screening system, the security screening information comprises information of auto-detected item and manual marking information, the information of auto-detected item comprises 3D model data and/or 2D image data of the ULD, as well as identified information of the suspicious item, generated by algorithmic processing of the scanning data, the manual marking information is information of the suspicious item manually marked by an operator on the 3D model data and/or the 2D image data.

In the above security screening system, the analysis working station comprises: an image reconstruction module configured to generate 3D model data and/or 2D image data through image reconstruction processing based on the scanning data; an image recognition module configured to perform image recognition processing of the 3D model data and/or the 2D image data, and acquire and mark information of the suspicious item; and a manual marking module configured to display the 3D model data and/or the 2D image data, and accept information of the suspicious item manually marked by an operator on the 3D model data and/or the 2D image data.

In the above security screening system, the review working station compares the security screening information and the recheck item information; under a condition that recheck is qualified, information of the ULD is stored and a security screening process ends; and under a condition that the recheck is unqualified, the recheck process is re-performed on the ULD.

In the above security screening system, the review working station is able to add a new manual marking during confirmation.

In the above security screening system, the mobile device comprises: a 3D display module configured to display a 3D coordinate scenario of interior of the ULD, and stereoscopically present the suspicious item in the coordinate scenario, wherein the 3D coordinate scenario is able to be scaled, flipped and stretched; a suspicious item location module configured to plan a route to a location of the suspicious item inside of the ULD, and guide an operator to find the suspicious item; a recording module configured to accept information input by the operator.

A second aspect of the present application provides a control method of a security screening system for an ULD, comprising: controlling a computerized tomography (CT) machine to perform whole box scan of the ULD; controlling an analysis working station to identify and mark security screening information of a suspicious item based on a scanning data; controlling a recheck working station provided with a mobile device to submit recheck item information, wherein the mobile device is synchronized with the security screening information of the suspicious item, performs recheck process on the suspicious item inside of the ULD, and is able to input the recheck item information formed by the recheck process; and controlling a review working station to confirm the security screening information of the suspicious item and the recheck item information.

In the above control method, the security screening information comprises information of auto-detected item and manual marking information, the information of auto-detected item comprises 3D model data and/or 2D image data of the ULD, as well as identified information of the suspicious item, generated by algorithmic processing of the scanning data, the manual marking information is information of the suspicious item manually marked by an operator on the 3D model data and/or the 2D image data.

In the above control method, identifying and marking the security screening information of the suspicious item based on the scanning data comprises: generating 3D model data and/or 2D image data through image reconstruction processing based on the scanning data; performing image recognition processing of the 3D model data and/or the 2D image data, and acquiring and marking information of the suspicious item; and displaying the 3D model data and/or the 2D image data, and accepting information of the suspicious item manually marked by an operator on the 3D model data and/or the 2D image data.

In the above control method, confirming the security screening information of the suspicious item and the recheck item information comprises: comparing the security screening information and the recheck item information, wherein under a condition that recheck is qualified, information of the ULD is stored and a security screening process ends; and under a condition that the recheck is unqualified, the recheck process is re-performed on the ULD.

In the above control method, a new manual marking is able to be added during confirmation.

In the above control method, the mobile device is controlled to: display a 3D coordinate scenario of interior of the ULD, and stereoscopically present the suspicious item in the coordinate scenario, wherein the 3D coordinate scenario is able to be scaled, flipped and stretched; plan a route to a location of the suspicious item inside of the ULD, and guide an operator to find the suspicious item; accept information input by the operator.

A third aspect of the present application provides a computer readable storage medium having a computer program stored thereon, wherein the computer program, when executed by a computer, implements any of the above control methods.

A fourth aspect of the present application provides an electronic device, comprising: a processor; and a memory having a computer program stored thereon, wherein the computer program, when executed by the processor, implements any of the above control methods.

According to the security screening system for the ULD and the control method thereof of the present application, by the arrangement of the analysis working station, the recheck working station and the mobile device thereof, and the review working station, through the reasonable combination and the comprehensive judgment of the whole box scan and the recheck process, the reasonable security screening process of the ULD can be obtained, and the false alarm rate can be reduced.

### BRIEF DESCRIPTION OF THE DRAWINGS

Fig. 1 illustrates a schematic structural diagram of a security screening system related to a first implementation of the present application;
Fig. 2 illustrates a schematic structural diagram of a computerized tomography (CT) machine in the security screening system related to the first implementation of the present application;
Fig. 3 illustrates a schematic structural diagram of a mobile device in the security screening system related to the first implementation of the present application;
Fig. 4 illustrates an embodiment of a workflow performed by a review working station in the security screening system related to the first implementation of the present application;
Fig. 5 illustrates another embodiment of the workflow performed by the review working station in the security screening system related to the first implementation of the present application;
Fig. 6 illustrates a schematic flow chart of a control method of a security screening system related to a second implementation of the present application;
Fig. 7 illustrates a schematic flow chart of a processing performed by controlling an analysis working station in the control method related to the second implementation of the present application;
Fig. 8 illustrates a schematic flow chart of a processing performed by controlling a mobile device in the control method related to the second implementation of the present application;
Fig. 9 is a schematic structural diagram of an electronic device provided by a third implementation of the present application.

Reference number description:
10, CT machine;
20, analysis working station;
30, recheck working station;
40, mobile device;
50, review working station;
21, image reconstruction module;
22, image recognition module;
23, manual marking module;
41, 3D display module;
42, suspicious item location module;
43, recording module;
601, processor;
602, memory
603, communication interface;
610, bus.

### DETAILED DESCRIPTION

The exemplary implementations or embodiments of the present application will be described in details below with reference to the accompanying drawings. Although the exemplary embodiments of the present application are shown in the drawings, it should be understood that the present application may be implemented in various forms and should not be limited by the implementations or embodiments described herein. Instead, these implementations or embodiments are provided to provide a clearer understanding of the present application.

The terms "first", "second" and the like in the specification and the claim of the present application are used to distinguish similar objects and not to describe a particular order or sequence. It should be understood that the data described in this way can be interchangeable where appropriate, so that the embodiments of the present application can be implemented in an order other than those illustrated or described here. Furthermore, the terms "include" and "have" and any deformation of them are intended to cover unexclusive inclusion. For example, processes, methods, systems, products or apparatus including a series of steps or units are not limited to clearly listed steps or units, but may include other steps or units that are not clearly listed. The same or similar reference numbers in the description may indicate the components with the same or similar functions.

### <First implementation>

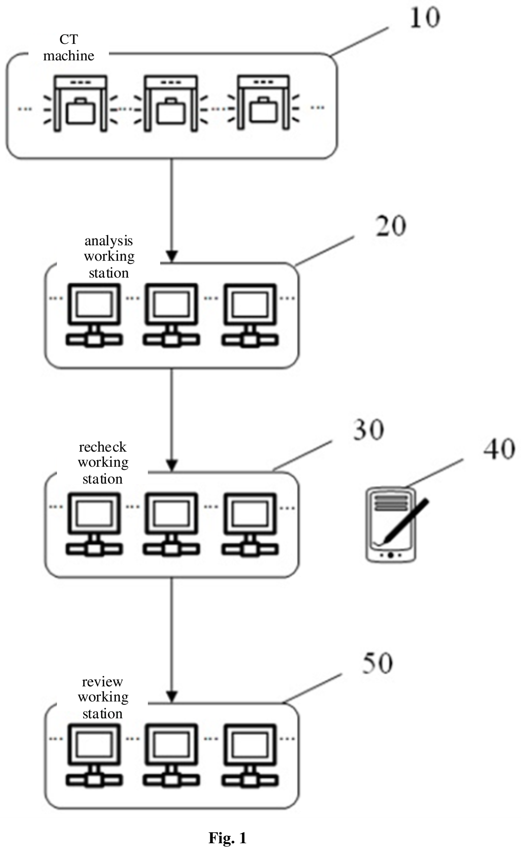

Fig. 1 illustrates a schematic structural diagram of a security screening system for an unit load device (ULD) related to a first implementation of the present application.

As shown in Fig. 1, the security screening system for the ULD related to the first implementation includes a computerized tomography (CT) machine 10, an analysis working station 20, a recheck working station 30, a mobile device 40, and a review working station 50.

Here, the analysis working station 20, the recheck working station 30, and the review working station 50 can be a server station, a workstation, and the like. There may be a plurality of CT machines 10, analysis working stations 20, recheck working stations 30, mobile devices 40, and review working stations 50.

The CT machine 10 performs whole box scan of the ULD and generates scanning data.

The CT machine 10 may be a CT machine cluster that may run multiple ULD scanning CT machines simultaneously to scan the ULD in parallel, with one scan recorded as one package data item.

The analysis working station 20 identifies and marks security screening information of a suspicious item based on the scanning data.

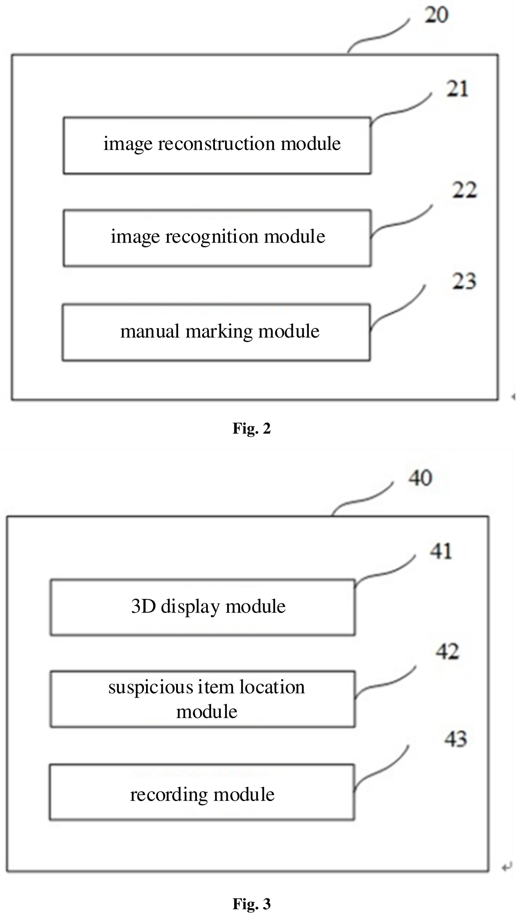

Specifically, as shown in Fig. 2, each analysis working station 20 may include an image reconstruction module 21, an image recognition module 22, and a manual marking module 23.

The image reconstruction module 21 is configured to generate 3D model data and/or 2D image data through image reconstruction processing based on the scanning data.

The image recognition module 22 is configured to perform image recognition processing of the 3D model data and/or the 2D image data, and acquire and mark information of the suspicious item. Here, the information of the suspicious item obtained by the image recognition module 22 performing image recognition processing of the 3D model data and/or the 2D image data is the above information of auto-detected item.

Under a condition that the image reconstruction module 21 and the image recognition module 22 are further described in detail, the analysis working station 20 may include a reconstruction and recognition server cluster. The reconstruction and recognition server cluster receives N (N≥1) package data items from the CT machine 10; runs a reconstruction algorithm and a recognition algorithm to process the package data items; constructs the corresponding 3D model data and/or the 2D image data, and identifies the information of the suspicious item, wherein the information of the suspicious item includes a position, a type and a quantity of the suspicious item; and incorporates the newly constructed data into the original package data items.

Here, the "reconstruction" refers to a data processing process of taking the binary data obtained by the X-ray penetrating an object as input to output the 2D image or the 3D model data of the object. The "Recognition" refers to a data processing process of taking the constructed 2D or 3D data as input to detect the type of the object, and under a condition that the object is likely to be a suspicious item, outputting the information of the suspicious item, such as the coordinate position of the object in the 2D image or the 3D model, the type of the object, and the quantity of the object.

Returning to Fig. 2, the manual marking module 23 is configured to display the 3D model data and/or the 2D image data, and accept information of the suspicious item manually marked by an operator on the 3D model data and/or the 2D image data.

Optionally, the manual marking module 23 of the analysis working station 20 can acquire the 3D model data and/or the 2D image data as well as the information of the suspicious item, and render the 3D model and the 2D image on the UI interface. Here, the 2D images are cross-sectional views of cutting the 3D model along different coordinate axes. Therefore, through the analysis working station 20, operations of marking of the suspicious item as well as adding, modifying, and deleting the information of the suspicious item may be performed on the 2D image or the 3D model. Supplement and correction may be performed by the operator of the analysis working station 20 based on the information of auto-detected item that is intelligently identified. Under a condition that a missed suspicious item is determined by comparing the 2D image and the 3D model, the missed suspicious item can be marked. Under a condition that the intelligently identified suspicious item is determined as misjudgment by artificial judgment, the suspicious item may be modified or deleted. The analysis working station 20 outputs the original 3D model, the 2D image data, and the intelligent identification data and the new suspicious item data judged by manual screening, and inputs them into the next level of the recheck working station. Here, the information formed by the operator of the analysis working station 20 performing operations of marking of the suspicious item as well as adding, modifying, and deleting the information of the suspicious item performed on the 2D image or the 3D model is the manual marking information.

In other words, the security screening information can include the information of auto-detected item and the manual marking information. The information of auto-detected item comprises the 3D model data and/or the 2D image data of the ULD, as well as the identified information of the suspicious item, generated by algorithmic processing of the scanning data. The manual marking information is the information of the suspicious item manually marked by the operator on the 3D model data and/or the 2D image data.

In the analysis working station 20, not only the information of auto-detected item calculated based on the algorithm of image reconstruction and image recognition is obtained, but also the information of the suspicious item manually marked by the operator is obtained. Therefore, the accuracy of the security screening information can be improved, which is beneficial to reduce the false alarm rate.

As shown in Fig. 1, the recheck working station 30 is provided with the mobile device 40, and the recheck working station 30 can submit recheck item information. The recheck working station 30 may be provided with a plurality of mobile devices 30. The mobile device 40 can be a smart phone, a smart PDA, a tablet computer, and the like, but is not limited to this. Here, "provided with the mobile device" means that the recheck working station 30 can communicate with the mobile device 40, and the mobile device 40 and the recheck working station 30 are jointly used for the recheck processing.

The mobile device 40 is synchronized with the security screening information of the suspicious item, performs recheck process on the suspicious item inside of the ULD, and is able to input the recheck item information formed by the recheck process. The mobile device 40 may receive the security screening information of the suspicious item from the analysis working station 20 or the recheck working station 30 to achieve the synchronization. The mobile device 40 may also send the generated recheck item information to the recheck working station 30. The operator performing the recheck process can enter the interior of the ULD with the mobile device 40 in hand, so as to perform the recheck process on the ULD.

Optionally, the recheck working station 30 can be a recheck working station cluster. The recheck working station 30 can have the same image judging function as the analysis working station 20, namely have the image judging function of the 2D image and the 3D model. The recheck working station 30 can obtain tasks from the recheck task queue, and open the package data that is determined as suspected by the analysis working station 20 or the package data rejected from the review working station 50. The package data contains the information of auto-detected item and the manual marking information discriminated by the analysis working station 20, or the information of the suspicious item (that is, the confirmation conclusion information) that has experienced the recheck and has been determined as unacceptable by the review working station 50.

The operator of the recheck working station 30 can take photos using the provided mobile device 40 according to the position information of the suspicious item in the 3D model. The mobile device 40 is bound to the recheck working station 30 point to point, and the returned photo information is bound to the suspicious item one by one. The recheck process can perform physical inspection on the ULD, synthesize the judgment information of the analysis working station 20 and photo results, further classify the intelligent security information and manual security information of the judging station 20 in detail, and submit the processing results. Cargo processing results include release, rejection and transfer. In the recheck process of the recheck working station 30, under a condition that a new suspicious item is found, the suspicious item can be added and marked. The recheck working station 30 outputs the original 3D model, the 2D image data, the recheck item information submitted after manual recheck. The recheck item information includes further detailed information for the suspicious item identified in the analysis working station 20, the photos of the suspicious item taken by the mobile device, the obtained processing results information, and the newly added suspicious item data.

Optionally, as shown in Fig. 3, the mobile device 40 may include a 3D display module 41, a suspicious item location module 42, and a recording module 43.

The 3D display module 41 is configured to display a 3D coordinate scenario of interior of the ULD, and stereoscopically present the suspicious item in the coordinate scenario, wherein the 3D coordinate scenario is able to be scaled, flipped and stretched.

The suspicious item location module 42 is configured to plan a route to a location of the suspicious item inside of the ULD, and guide an operator to find the suspicious item. The route may be a route from the entrance of the ULD to the location of the suspicious item, or from the mobile device 40 to the location of the suspicious item.

The recording module 43 is configured to accept information input by the operator. The operator may input the photos of the suspicious item, the further detailed information of the suspicious item, and the newly added suspicious item data into the mobile device 40 through the recording module 43.

Through providing the 3D display module 41, the suspicious item location module 42, and the recording module 43 in the mobile device 40, the process of the operator entering the ULD for the recheck process is more convenient and faster, which can improve the efficiency of the recheck, and avoid finding the wrong suspicious item.

Furthermore, the mobile device 40 may further include an recheck item information generation module, which may generate the recheck item information based on the information input by the operator. In other words, the recheck item information generation module may generate the recheck item information based on the information input through the mobile device 40 and/or the information entered by the operator of the recheck working station 30. The recheck item information generation module may also be included in the recheck working station 30 instead of the mobile device 40. At this time, the inspection information may include the information input by the operator of the recheck working station 30 and the information input by the operator of the mobile device 40.

Here, the recheck working station 30 is provided with the mobile device 40, and the mobile device 40 may enter into the interior of the ULD to perform the recheck process. Further, the data input by the recheck working station 30 and the mobile device 40 can be used as the recheck item information. Through the cooperation between the fixed terminal and the mobile terminal, the efficiency of the recheck may be improved, the error rate of the recheck process can be reduced, and the reliability of the recheck item information can be improved.

Returning to Fig. 1, the review working station 50 is configured to confirm the security screening information of the suspicious item and the recheck item information.

The review working station 50 may be a confirmation server cluster, which receives the judgment result of the recheck working station 30 at a previous level, stores the package data after the recheck, converts the suspected package into a confirmation task, and generates a confirmation task queue.

Specifically, the review working station 50 compares the security screening information and the recheck item information; under a condition that recheck is qualified, information of the ULD is stored and a security screening process ends; and under a condition that the recheck is unqualified, the recheck process is re-performed on the ULD. After comparing the security screening information and the recheck item information, the review working station 50 can also add the confirmation conclusion information to the package data. The confirmation conclusion information can indicate that the conclusion in this confirmation is that the recheck is qualified, so the recheck process is accepted; or the recheck is unqualified, so the recheck process is rejected.

Optionally, the review working station 50 can have the same image judging function as the analysis working station 20, namely have the image judging function of the 2D image and the 3D model. The review working station 50 can obtain tasks from the confirmation task queue, and open the package data that is determined as suspected by the recheck working station 30. In addition to the information of auto-detected item and the manual marking information of the analysis working station 20, as well as detailed suspicious item classification information added by the operator of the recheck working station 30, the package data further includes the photo information taken and obtained by the mobile device 40 provided in the recheck working station 30 performing the recheck. The review working station 50 is designed to extend the traditional ULD security screening process, and the function of the review working station 50 is to compare the information of auto-detected item and the manual marking information of the analysis working station 20 with the recheck item information generated by the mobile device 40 of the recheck working station 30. Based on big data analysis and manual identification, the conclusion of accepting or rejecting the processing mode of the suspicious item given by the recheck working station 30 may be given. At the same time, a new suspicious item can also be marked at the review working station 50. Under a condition that the staff of the review working station 50 determines that the information of auto-detected item and the manual marking information of the analysis working station 20 are consistent with the recheck item information of the recheck working station 30, the processing mode (one of release, rejection and transfer) of the suspicious item given by the recheck working station 30 may be accepted. At this time, the recheck is qualified, the package data is stored, the security screening for the package ends, and the security screening process ends. Under a condition that the staff of the review working station 50 rejects the processing mode of the suspicious item, or marks a new suspicious item, at this time, the recheck is unqualified. The package data re-flows into the recheck working station 30, the recheck task is generated and added to the recheck task queue, and the recheck process is repeated.

As described above, the review working station 50 can also add new manual marking during confirmation. At this time, the review working station 50 can make a comprehensive judgment based on the information of auto-detected item and the manual marking information of the analysis working station 20, the recheck item information of the recheck working station 30, and the newly added manual marking information.

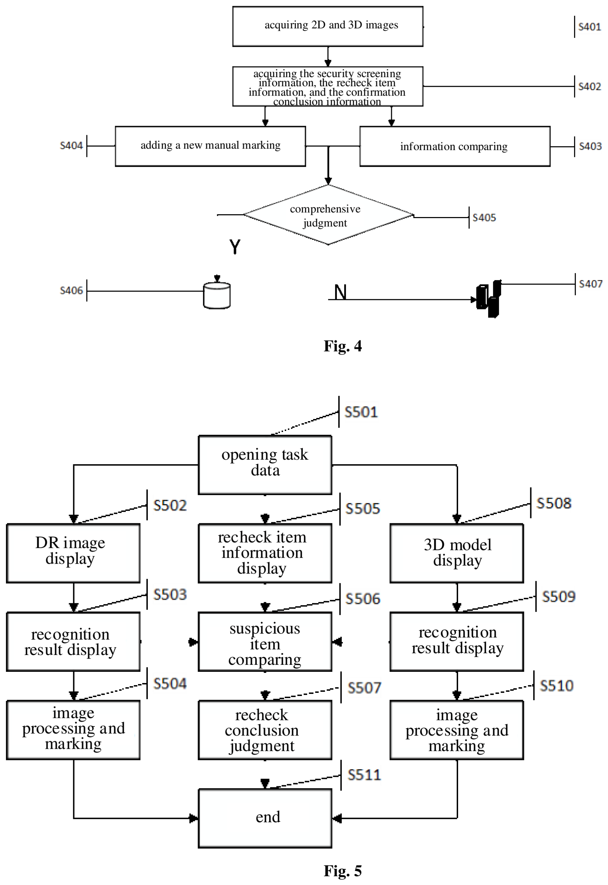

Fig. 4 illustrates an embodiment of a workflow performed by the review working station 50.

In step S401, the review working station 50 acquires the 3D model and the 2D image data processed by the reconstruction and recognition algorithm of the current task from the recheck working station 30. At this time, the 3D model and the 2D image data can also be directly acquired from the analysis working station 20. In step S402, the suspicious item information data is obtained, and the data is presented in two cases. In the first case, the package is in a first confirmation process, and no confirmation conclusion information has been added by the review working station 50, at this time, the data only includes the security screening information and the recheck item information. That is, the data includes the information of auto-detected item obtained through intelligent identification, the manual marking information obtained through manual image judging, and the recheck item information obtained according to the information of the suspicious item manually marked and added at the recheck working station 30 and the mobile device 40 as well as the photo information of the suspicious item. In the second case, the package data has experienced N (N≥1) processes, at this time, the data further includes the confirmation conclusion information added by the review working station last time. In step S403, the information comparison operation is performed. At this time, the image of the suspicious item can be framed on the 2D image, and the 3D stereo model of the suspicious item can also be framed by a 3D surrounding box on the 3D model. The UI interface can display the information of the type and the number of the suspicious items, and can also display the photos of the suspicious item taken by the mobile device 40 provided in the recheck working station 30, thereby displaying the detailed information of all suspicious items in the current package. Thus, the comparison may be performed based on the above information. In the S404 step, a new manual marking is added. In the whole security screening process, the judgment of each station is independent. Each station can independently add the suspicious item independently identified by the operator of the current station, and each level station can see the identification and judgment of the suspicious item made by the operator of a previous level station. In step S405, steps S201, S202, S203 and S204 are synthesized, all of the suspicious items of the current package are judged one by one. Through big data analysis, the intelligent identification result is given for the operator's reference, and the operator may accept or modify the result, and may submit the final judgment. Under a condition that the operator have no opinion on the classification judgment and the processing mode of the suspicious item, the classification judgment and the processing mode of the suspicious item is accepted. Under a condition that the operator disagree with the classification judgment or the processing mode of the suspicious item, the operator may give a new classification judgment of the suspicious item and make a rejection. In step S406, the review working station 50 accepts the classification judgment and the processing mode of all the suspicious items in the current package, then stores the current package data into the data server, and ends the security screening process. In step S407, the review working station 50 rejects the classification judgment and the processing mode of one or more suspicious items in the current parcel, and sends the package data to the cache of the recheck working station. Further, the recheck working station regenerates the recheck task and adds it into the task queue, and continues the security screening process of the package.

In this embodiment, a new suspicious item can be added in the review working station 50, and the rejected one or more package data items can be returned to the recheck working station 30 again, such that the recheck process can be performed again on the package data through the recheck working station 30 and the mobile device 40, thereby further reducing the false alarm rate.

Fig. 5 illustrates another embodiment of the workflow performed by the review working station 50. Fig. 5 illustrates another embodiment of the workflow performed by the review working station 50 at a different angle from Fig. 4.

In step S501, the task data is opened, that is, the package data associated with the package of the task is opened. In step S502, the 2D image is displayed on the interface. In step S503, the image judging recognition result is displayed on the 2D image. In step S504, a new suspicious item may be manually added to the 2D image. In step S505, the recheck item information generated by the recheck working station 30 may be displayed on the interface, that is, the detailed classification information and the photo information added by the recheck working station 30 and the mobile device 40 is displayed on the interface. In step S508, the 3D model is displayed on the interface. In step S509, the suspicious item is framed by a 3D frame on the 3D model. In step S506, a comprehensive judgment is made by combining the information of step S505 and the 2D image and the 3D model of steps S503 and S509. In step S507, whether the classification, the quantity and the processing mode of the suspicious item are correct may be determined. In step S510, a new suspicious item may be manually marked on the 3D model. In step S511, after the above steps are completed, the package data is stored and the process ends, or the package data is returned to the recheck process.

In this embodiment, under a condition that the 2D image and the 3D model, the security screening information and the recheck item information are displayed at the same time, the security screening information and the recheck item information can be compared, and a new suspicious item can be added to the 2D image and/or the 3D model after comparison, which is conducive to improve the accuracy of the comparison, and is conducive to reduce the false alarm rate.

According to the first implementation, by the analysis working station 20, the recheck working station 30 and the mobile device 40 thereof, and the review working station 50, through the reasonable combination and the comprehensive judgment of the whole box scan and the recheck process, the reasonable security screening process of the ULD can be obtained, and the false alarm rate can be reduced.

### <Second implementation>

The second implementation of the present application provides a control method of a security screening system of an ULD. The control method can be executed by a control device of the security screening system of the ULD. The control device may be an electronic device described in the third implementation.

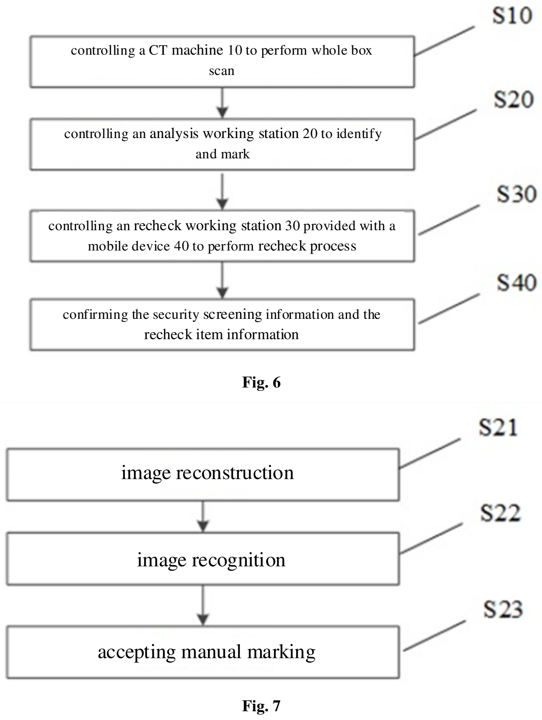

As shown in Fig. 6, the above control method may include steps S10 to S40.

In step S10, a computerized tomography (CT) machine 10 is controlled to perform whole box scan of the ULD.

In step S20, an analysis working station 20 is controlled to identify and mark security screening information of a suspicious item based on a scanning data.

Here, the security screening information may include information of auto-detected item and manual marking information. Here, the information of auto-detected item includes 3D model data and/or 2D image data of the ULD, as well as identified information of the suspicious item, generated by algorithmic processing of the scanning data. The manual marking information is information of the suspicious item manually marked by an operator on the 3D model data and/or the 2D image data.

Optionally, as shown in Fig. 7, the operation of identifying and marking the security screening information of the suspicious item based on the scanning data performed by the analysis working station 20 may specifically include steps S21 to S23.

In step S21, 3D model data and/or 2D image data are generated through image reconstruction processing based on the scanning data.

In step S22, image recognition processing of the 3D model data and/or the 2D image data is performed, and information of the suspicious item is acquired and marked.

In step S23, the 3D model data and/or the 2D image data are displayed, and information of the suspicious item manually marked by an operator on the 3D model data and/or the 2D image data is accepted.

Returning to Fig. 6, in step S30, a recheck working station 30 provided with a mobile device 40 is controlled to submit recheck item information input by the mobile device 40. Here, the mobile device 40 is synchronized with the security screening information of the suspicious item, performs recheck process on the suspicious item inside of the ULD, and is able to input the recheck item information formed by the recheck process.

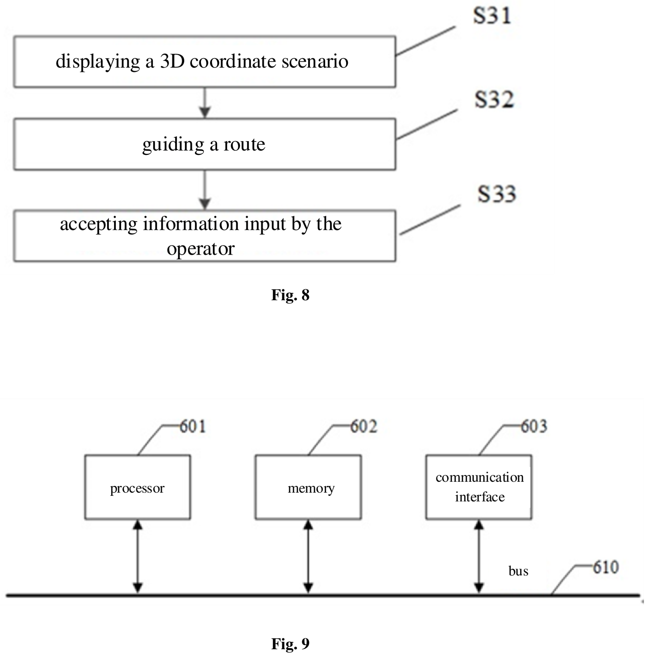

Optionally, as shown in Fig. 8, the mobile device 40 may be controlled to perform steps S31 to S33.

In step S31, a 3D coordinate scenario of interior of the ULD is displayed on the mobile device, and the suspicious item is stereoscopically presented in the coordinate scenario, wherein the 3D coordinate scenario is able to be scaled, flipped and stretched.

In step S32, a route to a location of the suspicious item inside of the ULD is planned, and an operator is guided to find the suspicious item.

In step S33, information input by the operator is accepted. This information may be text information and/or photo information.

Further, the mobile device 40 may be controlled to perform the processing of generating the recheck item information based on the information input by the operator.

Return to Fig. 6, in step S40, a review working station 50 is controlled to confirm the security screening information of the suspicious item and the recheck item information.

Optionally, confirming the security screening information of the suspicious item and the recheck item information comprises: comparing the security screening information and the recheck item information, wherein under a condition that recheck is qualified, information of the ULD is stored and a security screening process ends; and under a condition that the recheck is unqualified, the recheck process is re-performed on the ULD. A new manual marking is able to be added during confirmation.

In the second implementation, the details and effects of the operations performed by the analysis working station 20, the recheck working station 30, the mobile device 40 and the review working station 50 controlled by the control method may be referred to the details and effects of the relevant operations of the first implementation, and thus the detailed description is omitted here.

In this implementation, through the reasonable combination and the comprehensive judgment of the whole box scan and the recheck process, the reasonable security screening process of the ULD can be obtained, and the false alarm rate can be reduced.

### <Third implementation>

The present application may further provide an electronic device.

Fig. 9 is a schematic structural view of an electronic device provided by the third implementation of the present application. As shown in Fig. 9, the electronic device may include a processor 601 and a memory 602 storing computer programs or instructions.

Specifically, the processor 601 may include a central processing unit (CPU), or an application specific integrated circuit (ASIC), or one or more integrated circuit(s) configured to implement the embodiments of the present application.

The memory 602 may include a mass memory for storing data or instructions. As an example but not as a limitation, the memory 602 may include a hard disk drive (HDD), a floppy disk drive, a flash memory, an optical disk, a magneto-optical disk, a magnetic tape, or a universal serial bus (USB) drive or any combination of two or more of them. When appropriate, the memory 602 may include a removable or non-removable (or fixed) medium. When appropriate, the memory 602 may be disposed inside or outside of a comprehensive gateway disaster recovery device. In a certain embodiment, the memory 602 may be a non-volatile solid state memory. In a certain embodiment, the memory 602 includes a read only memory (ROM). Where appropriate, the ROM may be a mask-programmed ROM, a programmable ROM (PROM), an erasable PROM (EPROM), an electrical erasable PROM (EEPROM), an electrical alterable ROM (EAROM), or a flash memory, or a combination of two or more of these.

The processor 601 reads and executes the computer program instructions stored in the memory 602 to implement any of the control methods in the above embodiments.

In one example, the electronic device may further include a communication interface 603 and a bus 610. As shown in Fig. 9, the processor 601, the memory 602, and the communication interface 603 are connected through the bus 610 and achieve mutual communication with each other.

The communication interface 603 is mainly configured to achieve communication between the modules, apparatuses, units and/or devices in the embodiments of the present application.

The bus 610 includes hardware, software, or both of them, and is configured to couple components of the electronic device to each other. As an example but not as a limitation, the bus may include an Accelerated Graphics Port (AGP) or other graphics bus, an Enhanced Industry Standard Architecture (EISA) bus, a Front Side Bus (FSB), a HyperTransport (HT) interconnect, an Industry Standard Architecture (ISA) bus, an Infiniband interconnect, a Low Pin Count (LPC) bus, a memory bus, an Microchannel Architecture (MCA) bus, a Peripheral Component Interconnect (PCI) bus, a PCI-Express (PCI-X) bus, a Serial Advanced Technology Attachment (SATA) bus, a Video Electronics Standards Association Local (VLB) bus or any other suitable bus or a combination of two or more of them. When appropriate, the bus 610 may include one or more buses. Although the embodiments of the present application describe and illustrate a particular bus, any suitable bus or interconnect is also anticipated in the present application.

The electronic device may perform the control method described in the second implementation of the present application, so as to implement the security screening system described in the first implementation.

In addition, the present application may provide a readable storage medium for implementing the control method in the above embodiments. The readable storage medium stores program instructions thereon, and the program instructions, when executed by the processor, perform any of the control methods in the above embodiments.

It should be noted that, the present application is not limited to the specific configuration and processing described above and shown in the drawings. For the sake of brevity, a detailed description of the known method is omitted here. In the embodiments, several specific steps are described and shown as examples. However, the method process of the present application is not limited to the specific steps described and shown, and those skilled in the art can make various changes, modifications and additions, or change the sequence of steps after comprehending the gist of the present application.

The functional blocks shown in the structural block diagrams may be implemented as hardware, software, firmware, or a combination thereof. When implemented as hardware, it may be, for example, an electronic circuit, an application specific integrated circuit (ASIC), suitable firmware, a plug-in, a functional card, and the like. When implemented as software, elements of the present application are programs or code segments used to perform required tasks. The programs or code segments may be stored in a machine-readable medium, or transmitted on a transmission medium or a communication link through a data signal carried in a carrier wave. A "machine-readable medium" may include any medium that can store or transmit information. An example of the machine-readable media includes an electronic circuit, a semiconductor memory device, a ROM, a flash memory, an erasable ROM (EROM), a floppy disk, a CD-ROM, an optical disk, a hard disk, a fiber optic medium, a radio frequency (RF) link, and the like. The code segments may be downloaded via a computer network such as the Internet, intranet, and the like.

It should also be noted that, according to the exemplary embodiments described in the present application, some methods or systems are described based on a series of steps or apparatuses. However, the present application is not limited to the order of the steps, that is, the steps may be executed in the order described in the embodiments or in orders different from that in the embodiments, or several steps may be executed at the same time.

The above are only specific implementations of the present application, those skilled in the art may clearly understand that the specific working processes of the above systems, modules and units may be referred to the corresponding processes in the foregoing method embodiments, which is not repeated here for the convenience and brevity of the description.

It should be understood that the protection scope of the present application is not limited to this, and any person skilled in the art can easily think of various equivalent modifications or replacements within the technical scope disclosed in the present application, and these modifications or replacements should all be covered within the scope of protection of the present application.

## Claims

1. A security screening system for a unit load device (ULD), comprising:
a computerized tomography (CT) machine configured to perform whole box scan of the ULD to generate scanning data;
an analysis working station configured to identify and mark security screening information of a suspicious item based on the scanning data;
a recheck working station provided with a mobile device and capable of submitting recheck item information, wherein the mobile device is synchronized with the security screening information of the suspicious item, performs recheck process on the suspicious item inside of the ULD, and is able to input the recheck item information formed by the recheck process; and
a review working station configured to confirm the security screening information of the suspicious item and the recheck item information.

2. The security screening system according to claim 1, wherein
the security screening information comprises information of auto-detected item and manual marking information,
the information of auto-detected item comprises 3D model data and/or 2D image data of the ULD, as well as identified information of the suspicious item, generated by algorithmic processing of the scanning data,
the manual marking information is information of the suspicious item manually marked by an operator on the 3D model data and/or the 2D image data.

3. The security screening system according to claim 1 or 2, wherein
the analysis working station comprises:
an image reconstruction module configured to generate 3D model data and/or 2D image data through image reconstruction processing based on the scanning data;
an image recognition module configured to perform image recognition processing of the 3D model data and/or the 2D image data, and acquire and mark information of the suspicious item; and
a manual marking module configured to display the 3D model data and/or the 2D image data, and accept information of the suspicious item manually marked by an operator on the 3D model data and/or the 2D image data.

4. The security screening system according to claim 1 or 2, wherein
the review working station compares the security screening information and the recheck item information; under a condition that recheck is qualified, information of the ULD is stored and a security screening process ends; and under a condition that the recheck is unqualified, the recheck process is re-performed on the ULD.

5. The security screening system according to claim 4, wherein
the review working station is able to add a new manual marking during confirmation.

6. The security screening system according to claim 1, wherein
the mobile device comprises:
a 3D display module configured to display a 3D coordinate scenario of interior of the ULD, and stereoscopically present the suspicious item in the coordinate scenario, wherein the 3D coordinate scenario is able to be scaled, flipped and stretched;
a suspicious item location module configured to plan a route to a location of the suspicious item inside of the ULD, and guide an operator to find the suspicious item;
a recording module configured to accept information input by the operator.

7. A control method of a security screening system for a unit load device (ULD), comprising:
controlling a computerized tomography (CT) machine to perform whole box scan of the ULD;
controlling an analysis working station to identify and mark security screening information of a suspicious item based on a scanning data;
controlling a recheck working station provided with a mobile device to submit recheck item information, wherein the mobile device is synchronized with the security screening information of the suspicious item, performs recheck process on the suspicious item inside of the ULD, and is able to input the recheck item information formed by the recheck process; and
controlling a review working station to confirm the security screening information of the suspicious item and the recheck item information.

8. The control method according to claim 7, wherein
the security screening information comprises information of auto-detected item and manual marking information,
the information of auto-detected item comprises 3D model data and/or 2D image data of the ULD, as well as identified information of the suspicious item, generated by algorithmic processing of the scanning data,
the manual marking information is information of the suspicious item manually marked by an operator on the 3D model data and/or the 2D image data.

9. The control method according to claim 7 or 8, wherein
identifying and marking the security screening information of the suspicious item based on the scanning data comprises:
generating 3D model data and/or 2D image data through image reconstruction processing based on the scanning data;
performing image recognition processing of the 3D model data and/or the 2D image data, and acquiring and marking information of the suspicious item; and
displaying the 3D model data and/or the 2D image data, and accepting information of the suspicious item manually marked by an operator on the 3D model data and/or the 2D image data.

10. The control method according to claim 9, wherein
confirming the security screening information of the suspicious item and the recheck item information comprises:
comparing the security screening information and the recheck item information, wherein under a condition that recheck is qualified, information of the ULD is stored and a security screening process ends; and under a condition that the recheck is unqualified, the recheck process is re-performed on the ULD.

11. The control method according to claim 10, wherein
a new manual marking is able to be added during confirmation.

12. The control method according to claim 7, wherein
the mobile device is controlled to:
display a 3D coordinate scenario of interior of the ULD, and stereoscopically present the suspicious item in the coordinate scenario, wherein the 3D coordinate scenario is able to be scaled, flipped and stretched;
plan a route to a location of the suspicious item inside of the ULD, and guide an operator to find the suspicious item;
accept information input by the operator.

13. A computer readable storage medium having a computer program stored thereon,
wherein the computer program, when executed by a computer, implements the control method according to any of claims 7-12.

14. An electronic device, comprising:
a processor; and
a memory having a computer program stored thereon,
wherein the computer program, when executed by the processor, implements the control method according to any of claims 7-12.
